# EUROPEAN PATENT SPECIFICATION

(11) **EP 4 209 009 B1**
(45) Date of publication and mention of the grant of the patent: **10.12.2025**
(21) Application number: 20767796.4
(22) Date of filing: 04.09.2020
(51) Int. Cl.: H04N 19/187

(54) **SPLIT RENDERING TO IMPROVE TOLERANCE TO DELAY VARIATION IN EXTENDED REALITY APPLICATIONS WITH REMOTE RENDERING**
SPLIT-RENDERING ZUR VERBESSERUNG DER TOLERANZ GEGENÜBER VERZÖGERUNGSSCHWANKUNGEN IN ANWENDUNGEN DER ERWEITERTEN REALITÄT MIT REMOTE-RENDERING
RENDU FRACTIONNÉ POUR AMÉLIORER LA TOLÉRANCE AUX VARIATIONS DE DÉLAI DANS LES APPLICATIONS DE RÉALITÉ ÉTENDUE AVEC RENDU À DISTANCE

(43) Date of publication of application: 12.07.2023
(73) Proprietor: Telefonaktiebolaget LM ERICSSON (PUBL), 16483 Stockholm (SE)
(72) Inventor: MIHÁLY, Attila, 2120 DUNAKESZI (HU); FORMANEK, Bence, 1037 Budapest (HU)
(74) Representative: Ericsson
(86) International application number: PCT/EP2020/074819
(87) International publication number: WO 2022/048768

(56) References cited:
- US-B1- 10 446 119

## Description

### TECHNICAL FIELD

The present disclosure relates generally to eXtended Reality (XR) applications, and more particularly, to techniques for split-rendering process to mitigate impact of delay variation in XR applications with remote rendering.

### BACKGROUND

Mobile devices, head-mounted displays (HMDs), set top boxes and similar client devices lack the graphics capabilities and processing power for extended reality (XR) applications, such as video games and training simulations. XR applications include both virtual reality (VR) and augmented reality (AR) applications. The limitations on processing power and graphics capabilities can be overcome by implementing remote rendering in which the heavy lifting of three-dimensional (3D) graphics rendering is performed by a central server and the rendered video is transmitted to the client device over a network. For example, rendering servers can be located in a data center in an edge cloud. This approach requires real-time transport of encoded (compressed) video on the downlink to the client device and of sensor data (as well as camera capture for AR) on the uplink to the rendering server.

Video games and XR applications typically have very strict latency requirements. The interaction latency, i.e., the time from user presses a button or moves the controller until the video has been updated on the display (e.g., HMD) should be in the order of 100ms. The motion to photon latency requirement, i.e., the time from movement of the user's head until the video has been updated on the display is even shorter, in the order of about 20ms. This latency requirement is practically unachievable in the case of remote rendering, so it is mitigated by techniques like time warp.

Compounding the problem of latency, the AR/VR application may react to the changing network condition by changing its encoding quality and therefore the rate of the video streams. Such adaptation methods are supported in current real-time video streaming solutions, such as Web Real-Time Communication (WebRTC) or Self-Clocked Rate Adaptation for Multimedia (SCReAM). Volatile throughput is a known issue in current (fixed and mobile) networks, and it is going to be even more volatile in Fifth Generation (5G) networks, where larger bit-pipes are possible with New Radio (NR) but the fading and interference effects of high-frequency channels are also more pronounced.

When the network throughput is lower than the video encoding rates, video packets will start queuing up at the bottleneck link and either will be delayed (delivered late) to the client or lost. Potential retransmission of these frames can result in additional delays. Because of the stringent latency requirement of the XR applications, the result of the queuing delays is that the delayed frames cannot be decoded and presented in time, which is effectively equivalent to being lost.

To prevent long queuing delays, the AR/VR application may react to the changing network condition by changing the encoding quality and therefore the bitrate of the video stream. With bitrate adaptation, the system will attempt to match the encoding rate of the video to the throughput of the network to prevent queueing delays. When the bitrate is adapted, there is, however, a transient period between the time that congestion is detection and the time that the bitrate is adjusted. During this transient period, the video rate may exceed the throughput. The length of the transient period may be decreased by reacting to congestion as fast as possible using, for example, the Low Latency, Low Loss, Scalable Throughput (L4S) mechanism that enables low transport queue build-ups. However, fast reaction to congestion may result in insufficient utilization of available resources and ultimately in decreased user experience.

Eliminating queuing delays by dropping frames at the transport queue or even at the server is not a viable solution since all frames have to be available at the client for decoding. If a frame is lost, a new I-frame would be needed that is considerably larger than a P-frame so creating I-frame should be avoided if possible.

US 10,446,119 B1 discloses systems for split rendering of multiple graphic layers. An XR system may include a processing device that generates and renders multiple graphic layers and a display device that displays the graphic layers to create a virtual environment. The processing device may divide the multiple graphic layers into sets of graphic layers and composite each set into a composite layer for transmission to the display device over a respective stream.

### SUM MARY

The present disclosure relates generally to a method of split rendering to make video applications more tolerant of queuing delay variation. The rendered image is divided into layers referred to as graphic layers to reduce video stream size. The server groups and orders the graphic layers based on Quality of Experience (QoE) importance. When applying bitrate adaptation, the server reduces the video quality of the layers with lower importance first. The client device decodes and presents the graphic layers that have been received in time, i.e., until decoding should start. The client device also keeps the last received instance for each graphic layer and uses them for the presentation if the next instance of the graphic layer is not been received in time for decoding. The client device provides feedback to the server indicating which layers it has received in time. Based on the feedback, the server control its ordering and adaptation mechanism.

Aspects of the invention are set out in the independent claims appended hereto. Optional features are set out in the dependent claims.

### BRIEF DESCRIPTION OF THE DRAWINGS

Figure 1 is a functional block diagram illustrating a communications system configured according to one embodiment of the present disclosure.
Figure 2 is a flow chart illustrating a method of split rendering, implemented at a server node in an Edge Data Network (EDN), to mitigate impact of delay variation in a remote rendering system.
Figure 3 illustrates objects in a visual scene and their position information and velocity.
Figure 4 illustrates the objects of the visual scene after sorting and grouping.
Figure 5 illustrates an exemplary composite video frame.
Figure 6 is a flow chart illustrating a method of split rendering, implemented at a client device connected to a server node in an Edge Data Network (EDN), to mitigate impact of delay variation.
Figure 7 is a schematic block diagram illustrating a server node configured for split rendering to mitigate the impact of delay variation in a remote rendering system.
Figure 8 is a schematic block diagram illustrating a client device configured for split rendering to mitigate the impact of delay variation in a remote rendering system.
Figure 9 is a flow chart illustrating a method of split rendering, implemented at a server node in an Edge Data Network (EDN), to mitigate impact of delay variation in a remote rendering system.
Figure 10 is a flow chart illustrating a method of split rendering, implemented at a client device connected to a server node in an Edge Data Network (EDN), to mitigate impact of delay variation.
Figure 11 is a schematic block diagram the main functional components of a server node configured to perform split rendering to mitigate the impact of delay variation as herein described.
Figure 12 is a schematic block diagram illustrating the main functional components of a client device configured to perform split rendering to mitigate the impact of delay variation as herein described.

### DETAILED DESCRIPTION

An improved split rendering process of the present disclosure mitigates the impact of delay variation in XR application with remote rendering applications. A graphics application, such as a game engine, executes on a server node that is disposed in an Edge Data Network (EDN). The game engine generates a visual scene for display to a remote user. The visual scene is split rendered to generate graphic layers from 3D objects in the visual scene. The server node groups and sorts the graphic layers based on QoE importance to create graphic layer groups, encodes each graphic layer group into a composite video frame and appends metadata to the composite video frame identifying the graphic layer groups. The encoded video frame is then transmitted in sorted order based on quality rank to a client device 200 (e.g., an HMD worn by a user) where the video frame is decoded and displayed. When the deadline for decoding the video is reached, the client device reads the metadata, identifies the graphic layer groups and decodes each graphic layer group that is received prior to the decoding deadline. If a graphic layer group is not timely received prior to the decoding deadline, the client device 200 derives a substitute graphic layer group for the late or missing graphic layer group using buffered data from a previous frame. The resultant graphic layers are then rendered to reconstruct the visual scene and displayed to the user on the client device 200. The client device 200 further sends feedback to the server indicating the graphic layer groups that were timely received.

Based on feedback from the client, the split rendering technique as herein described enables the server node to separately adapt the graphic layer groups responsive to changes in network conditions depending on QoE-importance to ensure the best possible QoE for given transport conditions. Further, the need for fast adaptation to changing network conditions is eliminated by trading off a slight degradation of video quality for reduced latency and delay variability.

The techniques as herein described can be combined with other techniques, such a time warp techniques, to mitigate the impact of lost information in the rendered image.

The solution is network agnostic and does not require any specific cooperation with the network in form of off-line serve level agreements (SLAs) or in form of on-line network application interfaces (API) based interactions. However, the proposed method may still benefit from some of the existing technologies that keep the transport queues short, e.g., Explicit Congestion Notification (ECN) or L4S.

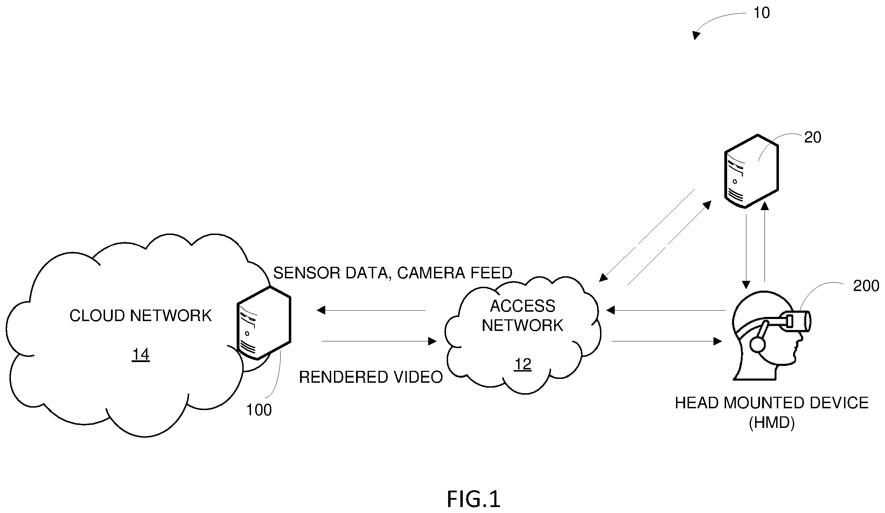

Figure 1 illustrates a communications network 10 configured according to one embodiment of the present disclosure. As seen in Figure 1, network 10 comprises an access network 12 communicatively connecting a client device 200 (e.g., HMD) with a server node 100 disposed in a cloud network 14. In some embodiments, a computing device 20 is disposed between client device 200 and server node 100 and is configured to perform at least some of the processing functions of client device 200.

The access network 12 may be any type of communications network (e.g., Wireless Fidelity (WiFi), ETHERNET, Wireless Local Area Network (WLAN), Wideband Code Division Multiple Access (WCDMA), Long Term Evolution (LTE), etc.), and functions to connect subscriber devices, such as client device 200, to one or more service provider nodes, such as server node 100. The cloud network 14 provides such subscriber devices with "on-demand" availability of computer resources (e.g., memory, data storage, processing power, etc.) without requiring the user to directly, actively manage those resources. According to embodiments of the present disclosure, such resources include, but are not limited to, one or more XR applications being executed on server node 100. The XR applications may comprise, for example, gaming applications and/or simulation applications used for training.

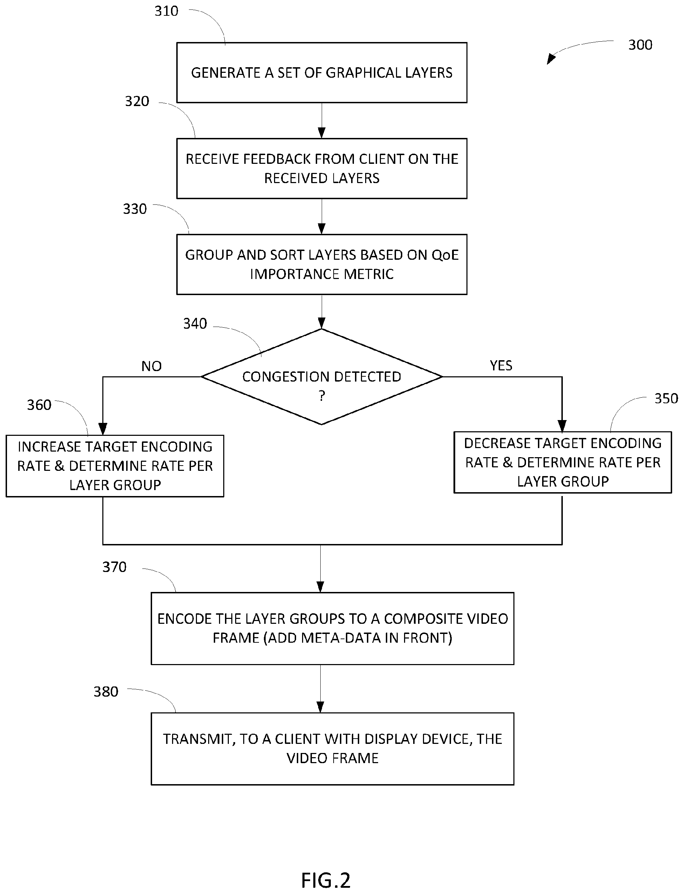

Figure 2 is a flow chart illustrating a method 300 for mitigating the impact of delay variation in a video image due to transport delays in the network. In this embodiment, method 300 is implemented by a server node 100 executing an XR application. The method 300 is performed on a fame-by-frame basis.

Generally, the server node 100 groups and sorts graphic layers in a video frame based on QoE importance and transmits the different graphic layer groups in sorted order to the client device 200 based on QoE rank. In more detail, when the server node 100 receives a visual scene from the XR application, the server node 100 renders the visual scene to generate a plurality of graphic layers, each of which comprises one or more 3D objects in the visual scene (block 310). Each graphic layer is associated with a motion vector and spatial location information.

The server node 100 optionally receives feedback from the client device 200 indicating the graphic layer groups that were received in the previous frame, which can be used for bitrate adaptation of the graphic layer group as hereinafter described (block 320).

The server node 100 groups and sorts the graphic layers based on QoE importance (block 330). That is, graphic layers deemed more important to the user experience are given a higher rank than graphic layers deemed to be less important to user experience. The server node 100 can consider a number of factors in determining the QoE rank of a graphic layer. The following is a non-exhaustive listing of factors that may be considered in grouping and sorting the graphic layers:
- Foreground objects and graphic layers for player objects generally have higher importance than graphics of background.
- Some objects (e.g., objects representing a gaming opponent's avatars) are more important to be tracked precisely.
- Newly appearing objects (e.g., a bullet shot in a first person shooter (FPS) game) are more important to be transferred since they cannot be inferred from previous video frames at the decoder.
- Moving objects are more important than static objects since time-warp from moving objects may cause viewing artifacts, like positional judder.
- Client feedback regarding which layers could be presented in the last frame could be an input to re-prioritize some layers.

The result of the grouping and sorting process is a set of graphic layer groups. Some graphic layer groups may comprise a single graphic layer while other groups comprise two or more graphic layers. In the most extreme cases, each group may comprise a single graphic layer.

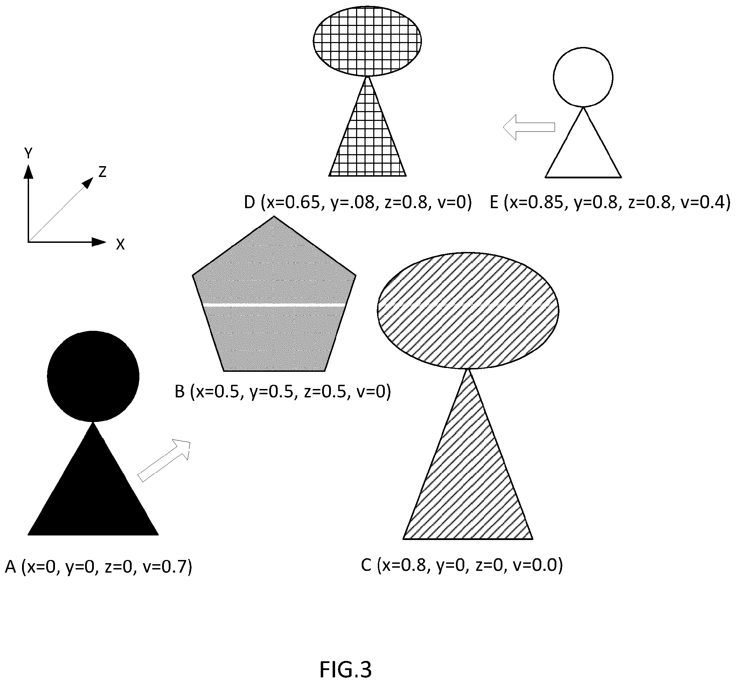

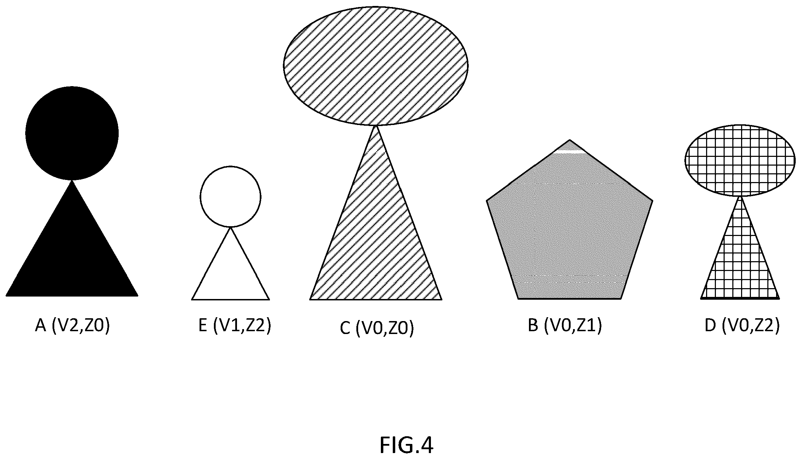

Figure 2 illustrates a collection of objects rendered into graphic layers, which is used as one example to illustrate grouping and sorting. The objects are labeled {A, B, C, D, E}. The position and velocity of each object is given. Figure 3 illustrates the objects after grouping and sorting. The QoE metric in this example is the velocity value assigned to the graphic layer and the Z-order. The graphic layers are initially grouped into three velocity ranges V0=0, V1=[0,.5] and V2=[.5,1]. The velocity values are scaled relative to the viewer's position. The groups are sorted in decreased velocity order, yielding {A},{E},{C,B,D}. Within each velocity group, the graphic layers are grouped in three separate Z-layers, with Z-ranges Z0=[0,.33], Z1=[.33,.66] and Z2=[.66,1], respectively. The top-level groups having more than one graphic layer are then sorted by increasing Z-order, yielding the order in Figure 4. Alternatively, object B, C and D could be included in separate graphic layer groups yielding {A},{E},{C},{B},{D}.

Returning to Figure 2, the server node 100 determines whether congestion is detected (block 340). This step is shown following the grouping and sorting but could be performed earlier. The detection of congestion can be based on client feedback, network feedback, its own detection mechanisms or some combination of these approaches. As noted above, client feedback is provided to the server node 100 to indicate what graphic layers or graphic layer groups were actually received in the previous frame. Receipt of less than all of graphic layers can be taken by the server node 100 an indication of network congestion. Conversely, receipt of all the graphic layers can be taken by the server node 100 as an indication that there is no network congestion. Network feedback could be in the form of lost or ECN-marked packets, or other information (e.g., available bandwidth) conveyed via explicit cooperation protocols. The own detection mechanisms may include explicit or implicit feedback from transport layer protocols.

The encoder at the server node 100 adapts to the network condition. Depending on whether network congestion is present, the server node 100 determines the encoding rates (also referred to herein as the target rate) for each graphic layer or graphic layer group. If congestion is detected, the target rate is decreased for one or more graphic layers or graphic layer groups (block 350). If congestion is not detected, the target rate for one or more graphic layers or graphic layer groups may be increased (block 360).

In one embodiment, the encoding rate, also referred to as the target rate, is determined individually for each graphic layer group. The encoding logic takes into account the QoE-importance of the graphic layer or graphic layer group, i.e., the more important graphic layers are encoded with higher quality. This QoE-aware encoding ensures, for a given network condition, the best possible QoE at the client device 200.

The sorted graphic layers are input to a video encoder along with the target rates determined at blocks 350 and/or 360. The encoder in the server node 100 encodes each graphic layer or graphic layer group separately based on the determined target rates (block 370). The independent encoding eliminates dependencies between graphic layer groups and ensures that each graphic layer group is separately decodable independently of the other graphic layer groups.

As noted above, a graphic layer group may comprise one or more graphic layers. Referring back to Figure 3, the encoder could, in one example, encode layers A and B separately and then encode layers C, D and E as a graphic layer group. In this example, the final encoding includes three graphic layer groups. In another example, the encoder could encode all graphic layers separately, i.e., as five separate 1 layer groups. The graphic layer groups for encoding are assembled into a composite video frame in order of QoE rank. For multi-layer groups, the graphic layer group may be assigned the QoE rank for highest ranking graphic layer in the group. During the encoding, the server node 100 appends metadata to the beginning of the composite frame that includes the number of video streams or graphic layer groups that are transmitted.

In some embodiments, the encoder can use the feedback from the client device 200 as reference for the encoding process. That is, the client device 200 may use the last received graphic layer or graphic layer group to encode the current graphic layer of graphic layer group. If a graphic layer or graphic layer group was not received in the previous frame, the encoder may use the last received graphic layer group as a reference for the current frame. For example, assume that the encoder is encoding Group C for the current frame and the client feedback indicates that group C was not received in frame n-1. In this case, the encoder can use Group C from frame n-2 as a reference to encode Group C in the current frame.

Following encoding, the composite video frame is transmitted to the client device 200 (block 380). The metadata is transmitted first, followed by each group in order based on the group rank.

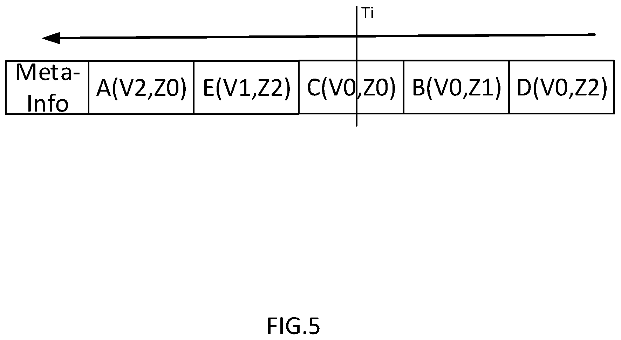

Figure 5 illustrates one example of a composite video frame based on the example shown in Figures 2 and 3. The composite frame includes five graphic layer groups labeled A - E respectively. The graphic layer groups or organized in sorted order in the composite video frame and metadata is appended to the beginning of the composite video frame. In this example, the metadata is transmitted first, followed by groups A, E, C, B and D in that order.

In some embodiments, the server node 100 may also encode motion information for each graphic layer or graphic layer group. The motion information can be used, for example, to perform time-warping at the client device 200.

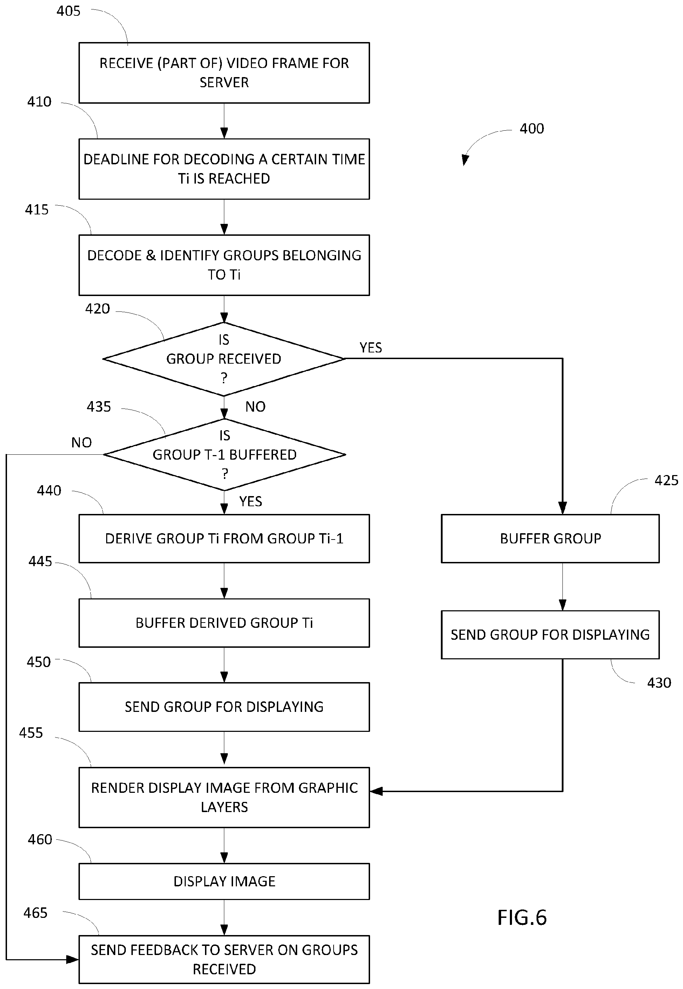

Figure 6 illustrates a complementary method 400 implemented by a client device 200 (e.g., HMD). At block 405, the client device 200 receives at least a portion of a current video frame, denoted as frame n, before the deadline to start decoding is reached. The decoding deadline is reached at time Ti (block 410). When the decoding deadline is reached, the client device 200 decodes the parts of the current frame received prior to the decoding deadline and checks which parts of the respective frame have arrived (block 415, 420). For this determination, the metadata placed at the beginning of the composite video frame is used. For example, if the decoding deadline Ti is the time shown by the vertical line in Figure 5, then the graphic layer groups available for decoding comprise groups A and E.

The graphic layer groups that have timely arrived are stored in a buffer and directly sent to displaying (blocks 425, 430). For the graphic layer groups that have not timely arrived, the client device 200 checks whether it has a buffered instance of the same graphic layer group from the last received frame (frame for time Ti-1 in Figure 5)(block 435). If so, the client device 200 derives this graphic layer group for time Ti from the buffered instance of the group for time Ti-1 (block 440). Techniques such as time-warping can be applied to get a better approximation of the graphic layers in this graphic layer groups. The derived graphic layer group is then stored in a buffer and sent downstream for displaying (blocks 445, 450).

When all the graphic layer groups have arrived or have been derived, the client device 200 renders the display image and outputs the image to a display (blocks 455, 460). The image is rendered from the graphic layers using the 3D position information and the layer texture.

Finally, the client device 200 sends feedback to the server node 100 indicating which graphic layer groups were received before the decoding deadline (block 465). As noted above, this feedback can be used to prioritize the graphic layers, to determine an encoding rate for graphic layer groups, or to select a reference for encoding the graphic layer in the current frame.

In some embodiments, client device 200 may continue receiving the missing parts of the current frame after the decoding deadline is reached. If a substitute graphic layer group is stored in the buffer, it can be overwritten or replaced when the missing part is finally received. In some embodiments, the client could wait until a predetermined time after Ti (Ti + t) to provide the feedback to the server node 100. In this case, the feedback would indicate the graphic layer groups received prior to Ti + t. In another embodiment, the client device 200 waits until the first bytes of the next frame arrive before sending feedback.

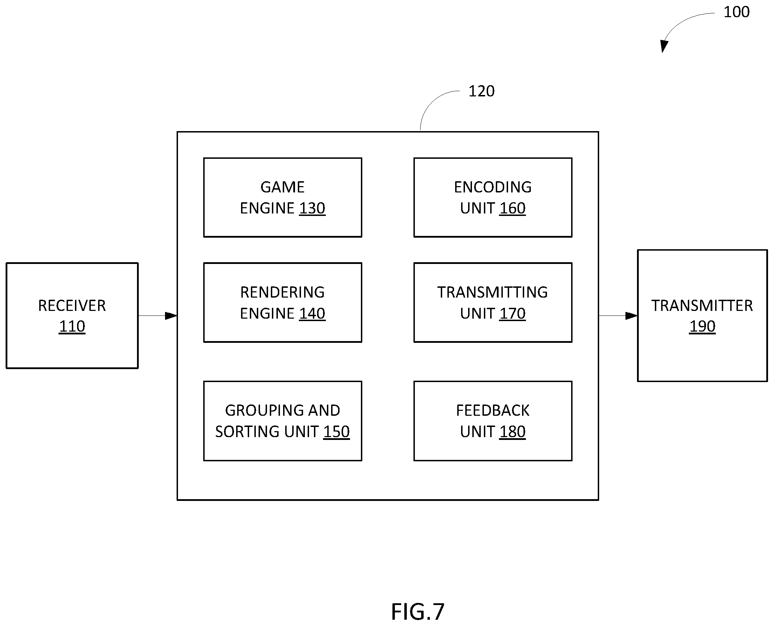

Figure 7 illustrates an exemplary server node 100 for XR applications configured to perform split rendering to reduce the impact of delay variation in remote rendering application. The server node 100 comprises a receiver 110, a processing unit 120, and a transmitter 190. The receiver 110 receives user input, sensor data, camera feeds and client feedback from the client device 200. The processing unit 120 runs an application, such as a video game or simulation, and outputs a video stream to be displayed to the user of the client device 200. The transmitter 190 transmits the video stream to the client device 200.

The processing unit 120 in this example comprises an optional game engine 130 or other application, a rendering engine 140, a grouping and sorting unit 150, an encoding unit 160, a transmitting unit 170, and an optional feedback unit 180. The various units 120-180 can be implemented by hardware and/or by software code that is executed by a processor or processing circuitry. The game engine 130 receives the user input, sensor data and camera feeds, maintains a game context, and generates visual scenes that are presented on a display of the client device 200. The visual scenes generated by the game engine 130 are input to the rendering unit 140. The rendering unit 140 renders the visual scene provided by the game engine 130 into a set of graphical layers. Each graphic layer comprises one or more objects in the visual scene. The graphic layer includes position information for reconstructing the visual scene from the graphic layers and motion information describing or characterizing the motion of the objects in the graphic layer. Generally, the objects in the same graphic layer will be characterized by the same motion.

The rendering unit 140 passes the graphic layers to the grouping and sorting unit 150. The grouping and sorting unit 150 groups and sorts the graphic layers according to QoE importance as previously described. During the grouping and sorting process, some of the graphical layers may be consolidated into a single graphic layer group that represents a set of graphic layers with similar importance. The encoding unit 160 separately encodes each graphic layer group into a composite video frame and appends metadata to the beginning of the composite video frame identifying the graphic layer groups. In the composite video frame, the groups are ordered according to importance, which can be derived from the importance of the graphic layers in the graphic layer group. The transmitting unit 170 transmits the composite video frame to the client device 200 over the network via the transmitter 290 according to the communication protocols for the network. The processing unit 120 optionally includes a feedback unit 180 to handle client feedback from the client device 200. The client feedback, as previously described, may be provided to the grouping and sorting unit 150 for use in prioritizing the graphical layers, or to the encoding unit 160 for use in encoding the graphic layers.

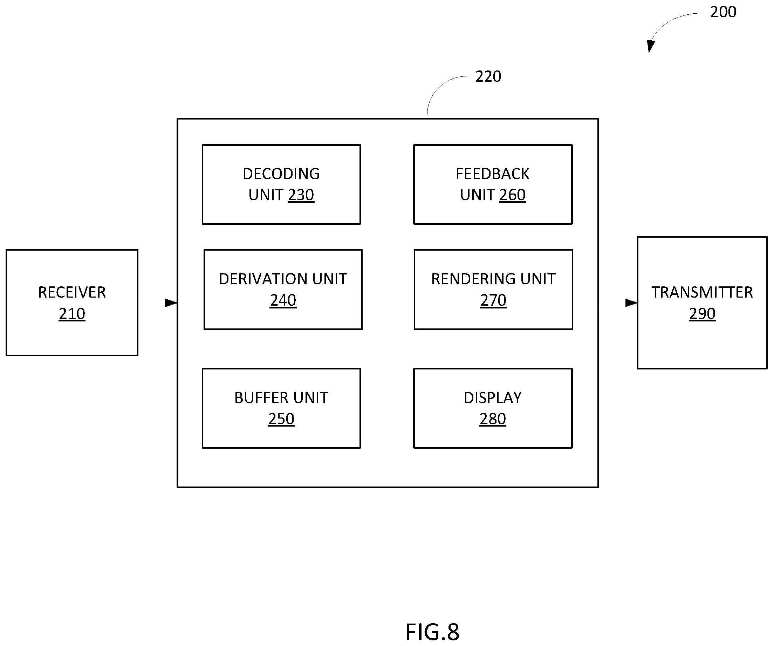

Figure 8 illustrates an exemplary client device 200 configured to perform split rendering to reduce the impact of delay variation in remote rendering applications. The client device 200 includes a receiver 210, processing unit 220, and transmitter 290. The receiver 210 receives rendered video representing a visual scene from the server node 100. The processing unit 220 decodes the rendered video received from the server node 100, reconstructs the visual scene based on the rendered video, and outputs the reconstructed visual scene for display to the user. The transmitter 290 sends user input received via a user interface (not shown), sensor data, camera feeds and client feedback to the server node 100.

The processing unit 220 includes a decoding unit 230, a derivation unit 240, a buffer unit 250, a feedback unit 260, a rendering unit 270, and an optional display 280. The various units 220-280 can be implemented by hardware and/or by software code that is executed by a processor or processing circuitry. The decoding unit 230 decodes the rendered video received from the server node 100 to obtain the graphic layers representing the objects in the visual scene. If any graphic layers in the current frame are missing (either because they arrived too late or were lost), the derivation unit 240 derives a substitute graphic layer group for the missing graphic layer group from information stored by the buffer unit 250. The buffer unit 250 stores the graphic layer groups that were successfully decoded and the substitute graphic layer groups generated by the derivation unit 240. The feedback unit 260 sends feedback to the server node 100 indicating the graphic layer groups that were received in time for decoding. The rendering unit 270 renders the composite video frame received from the server node 100 to reconstruct the visual scene output by the game engine 130 or other application running on the server node 100. The visual scene is output to the display 280 for presentation to the user.

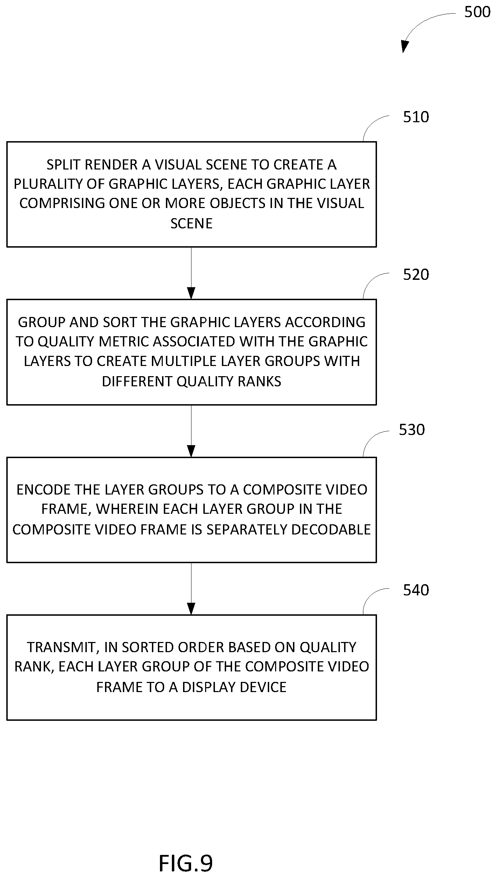

Figure 9 illustrates another exemplary method 500 of split rendering implemented by a server node 100 to reduce the impact of delay variation in remote rendering applications. The server node 100 split renders a visual scene to create a plurality of graphic layers (block 510). Each graphic layer comprises one or more objects in the visual scene. The server node 100 groups and sorts the graphic layers according to a quality metric associated with the graphic layers to create multiple graphic layer groups with different quality ranks (block 520). The server node 100 encodes the graphic layer groups into a composite video frame so that each graphic layer group in the composite video frame is separately decodable (block 530). The server node 100 transmits, in sorted order based on quality rank, each graphic layer group of the composite video frame to a client device 200 (block 540).

In some embodiments of the method 500, the server node further adds metadata to the composite video frame identifying each graphic layer and its position in the video frame.

In some embodiments of the method 500, grouping and sorting the graphic layers comprises grouping M graphic layers into N graphic layer groups based on quality metrics of the graphic layers, where M > N.

Some embodiments of the method 500 further comprise receiving feedback from the client device 200 indicating graphic layers received in a previous frame and determining the quality metrics for the graphical layers based on the feedback from the client device 200.

Some embodiments of the method 500 further comprise receiving feedback from the client device indicating graphic layers received in a previous frame and determining an encoding for a graphic layer based on the feedback from the client device 200.

In some embodiments of the method 500, determining an encoding for a graphic layer based on the feedback from the client device comprises reducing an encoding rate for a graphic layer group when the feedback indicates that one of the graphic layers in the group was not received in the previous frame.

Some embodiments of the method 500 further comprise detecting congestion in the communication link between the rendering device (e.g. server node 100) and the client device 200 and independently varying the encoding rate for each group based on detected congestion.

Some embodiments of the method 500 further comprise reducing an encoding rate for at least one graphic layer group when congestion is detected and increasing an encoding rate for at least one group when congestion is not detected.

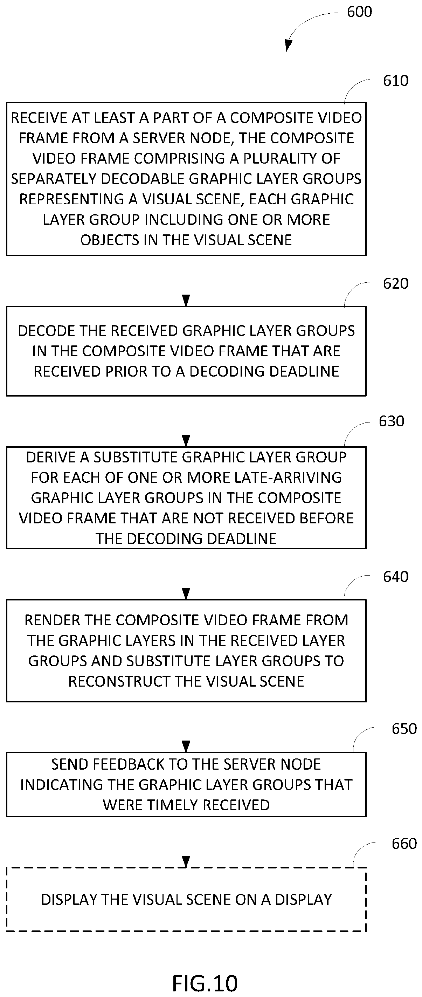

Figure 10 illustrates an exemplary method 600 of split rendering implemented by a client device 200 to reduce the impact of delay variation. The client device 200 receives at least a part of a composite video frame from a server node 100 (block 610). The composite video frame comprises a plurality of separately decodable graphic layer groups representing a visual scene. Each graphic layer group includes one or more graphic layers representing objects in the visual scene. The client device 200 decodes the received graphic layer groups in the composite video frame that are received prior to a decoding deadline (block 620). If any graphic layer groups have not arrived before the decoding deadline, the client device 200 derives a substitute graphic layer group for each of one or more late-arriving graphic layer groups in the composite video frame that are not received before the decoding deadline (block 630). The client device 200 renders the composite video frame from the graphic layers in the received graphic layer groups and substitute layer groups to reconstruct the visual scene for display (block 640). The client device 200 sends feedback to the server node 100 indicating the graphic layer groups that were timely received (block 650). The client device 200 optionally displays the visual scene on a display (block 660).

In some embodiments of the method 600, deriving a substitute graphic layer comprises, for each late-arriving graphic layer group, retrieving a previous graphic layer group corresponding to the late-arriving graphic layer group from a buffer and deriving the substitute graphic layer group based on the previous graphic layer group.

Some embodiments of the method 600 further comprise storing the timely received graphic layer groups and substitute graphic layer groups in a buffer.

Some embodiments of the method 600 further comprise, after a decoding deadline for the current frame, receiving a late-arriving graphic layer group, decoding the late-arriving graphic layer group, and storing the late-arriving graphic layer group in a buffer by replacing a corresponding substitute graphic layer group with the late-arriving graphic layer group.

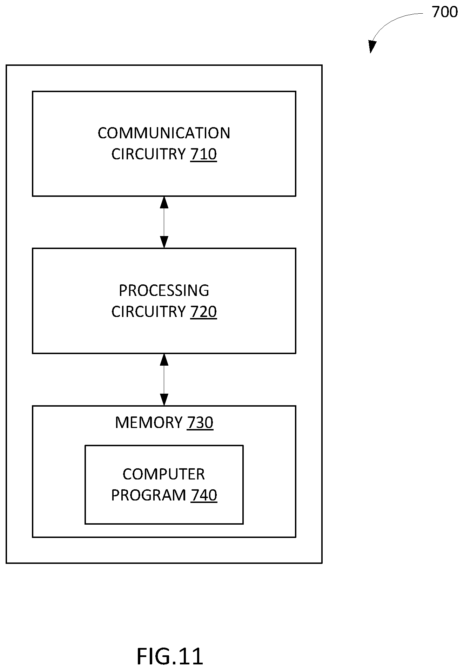

Figure 11 is a schematic block diagram illustrating some exemplary components of a server node 700 configured to perform split rendering as herein described to reduce the impact of delay variation. Server node 700 comprises communication circuitry 710, processing circuitry 720 and memory 730. As described in more detail later, a computer program 740 that configures server node 700 to operate according to the present embodiments may be stored in memory 730.

The communication circuitry 810 comprises network interface circuitry for communicating with other nodes in and/or communicatively connected to communication network 10. Such nodes include, but are not limited to, one or more network nodes and/or functions disposed in cloud network 14, access network 12, and one or more client devices 200, such as a HMD.

Processing circuitry 720 controls the overall operation of server node 16 and is configured to perform the steps of methods 300 and 500 shown in Figures 2 and 9 respectively. Such processing may include, for example, split rendering a visual scene to create graphic layers, grouping and sorting the graphic layers into graphic layer groups, encoding the graphic layer groups and transmitting the graphic layer groups in sorted order based on QoE importance. The processing circuitry 720 may comprise one or more microprocessors, hardware, firmware, or a combination thereof.

Memory 730 comprises both volatile and non-volatile memory for storing computer program code and data needed by the processing circuitry 720 for operation. Memory 730 may comprise any tangible, non-transitory computer-readable storage medium for storing data including electronic, magnetic, optical, electromagnetic, or semiconductor data storage. Memory 730 stores computer program 740 comprising executable instructions that configure the processing circuitry 720 to implement methods 300 and 500 shown in Figures 2 and 9 respectively. A computer program 740 in this regard may comprise one or more code modules, as is described more fully below. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 740 for configuring the processing circuitry 720 as herein described may be stored in a removable memory, such as a portable compact disc, portable digital video disc, or other removable media. The computer program 740 may also be embodied in a carrier such as an electronic signal, optical signal, radio signal, or computer readable storage medium.

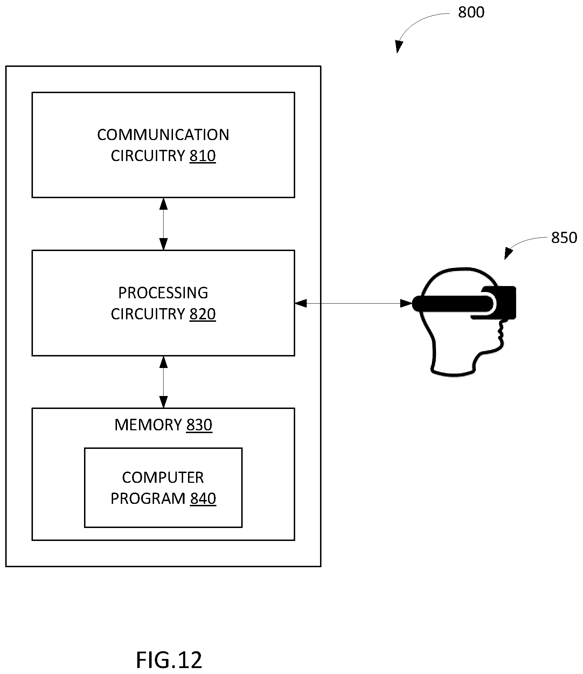

Figure 12 is a schematic block diagram illustrating some exemplary components of a client device 200 configured to configured to perform split rendering as herein described to reduce the impact of delay variation. In the illustrated embodiment, the client device 200 includes a head mounted display 850 configured to display computer generated imagery (CGI), live imagery captured from the physical environment, or a combination of both. The client device 800 in this embodiment comprises communication circuitry 810, processing circuitry 820, memory circuitry 830 and a user interface 850. As described in more detail later, a computer program 840 that configures client device 200 to operate according to the present embodiments may be stored in memory 830.

The communication circuitry 810 comprises network interface circuitry for communicating with other nodes in and/or communicatively connected to communication network 10. Such nodes include, but are not limited to, one or more network nodes and/or functions disposed in cloud network 14, access network 12, and one or more server nodes 100.

Processing circuitry 820 controls the overall operation of the client device 800 and is configured to perform the steps of methods 400 and 600 shown in Figures 6 and 10 respectively. Such processing may include, for example, receiving a composite video stream comprising a plurality of separately decodable graphic layer groups (each graphic layer groups comprising one or more graphic layers representing objects in a visual scene), decoding received graphic layer groups in the composite video frame, deriving substitute graphic layer groups for late or missing graphic layer groups, rendering the composite video frame from the received graphic layer groups and substitute layer groups to reconstruct the visual scene and sending feedback to the server node indicating graphic layer groups that were received in time for decoding. The processing circuitry 820 may comprise one or more microprocessors, hardware, firmware, or a combination thereof.

Memory 830 comprises both volatile and non-volatile memory for storing computer program code and data needed by the processing circuitry 820 for operation. Memory 830 may comprise any tangible, non-transitory computer-readable storage medium for storing data including electronic, magnetic, optical, electromagnetic, or semiconductor data storage. Memory 830 stores computer program 840 comprising executable instructions that configure the processing circuitry 820 to implement methods 400 and 600 shown in Figures 5 and 10 respectively. A computer program 840 in this regard may comprise one or more code modules, as is described more fully below. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 840 for configuring the processing circuitry 820 as herein described may be stored in a removable memory, such as a portable compact disc, portable digital video disc, or other removable media. The computer program 840 may also be embodied in a carrier such as an electronic signal, optical signal, radio signal, or computer readable storage medium.

The user interface 850 comprises a head mounted display and/or user controls, such as buttons, actuators, and software-driven controls, that facilitates a user's ability to interact with and control the operation of the application running on the server node 100. The head mounted display is worn by the user and is configured to display rendered video images to a user. The head-mounted display may include sensors for sensing head movement and orientation and cameras providing a video feed. Other types of displays can be used in place of the head-mounted display. Exemplary client devices include Cathode Ray Tubes (CRTs), Liquid Crystal Displays (LCDs), Liquid Crystal on Silicon (LCos) displays, and Light-Emitting Diodes (LEDs) displays. Other types of client devices not explicitly described herein may also be possible.

Those skilled in the art will also appreciate that embodiments herein further include corresponding computer programs. A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

## Claims

1. A method (500) of remote rendering implemented by a server node (100, 700), the method comprising:
split rendering (510) a visual scene to create a plurality of graphic layers, each graphic layer comprising one or more objects in the visual scene;
grouping and sorting (520) the graphic layers according to quality metric associated with the graphic layers to create multiple graphic layer groups with different quality ranks;
encoding (530) the graphic layer groups to a composite video frame, wherein the graphic layer groups are encoded and are assembled into the composite video frame in sorted order based on quality rank, with the graphic layer group having the highest quality rank ordered first, and wherein each graphic layer group in the composite video frame is separately decodable; and
transmitting (540), in the sorted order based on quality rank, each graphic layer group of the composite video frame to a client device (200, 800).

2. The method (500) of claim 1 further comprising adding metadata to the composite video frame identifying each graphic layer and its position in the video frame.

3. The method (500) of claim 1 wherein grouping and sorting the graphic layers comprises grouping M graphic layers into N graphic layer groups based on quality metrics of the graphic layers, where M > N.

4. The method (500) of claim 1 further comprising:
receiving feedback from the client device (200, 800) indicating graphic layers received in a previous frame;
determining the quality metrics for the graphical layers based on the feedback from the client device (200, 800).

5. The method (500) of claim 1 further comprising:
receiving feedback from the client device (200, 800) indicating graphic layers received in a previous frame;
determining an encoding for a graphic layer based on the feedback from the client device (200, 800).

6. The method (300) of claim 5 wherein determining an encoding for a graphic layer based on the feedback from the client device (200, 800) comprises reducing an encoding rate for a graphic layer group when the feedback indicates that one of the graphic layers in the group was not received in the previous frame.

7. The method (500) of any one of claims 1 - 5, further comprising:
detecting congestion in the communication link between the rendering device and the client device (200, 800);
independently varying the encoding rate for each group based on detected congestion.

8. The method (500) of claim 7, wherein independently varying the encoding rate based on detected congestion comprises:
reducing an encoding rate for at least one graphic layer group when congestion is detected; and
increasing an encoding rate for at least one group when congestion is not detected.

9. A method (600) implemented by a client device (200, 800) of displaying video, the method comprising:
receiving (610) at least a part of a composite video frame from a server node (100, 700), the composite video frame comprising a plurality of separately decodable graphic layer groups, each graphic layer group including one or more graphic layers associated with a quality metric and representing an object in a visual scene, wherein the graphic layer groups have different quality ranks and are in sorted order based on quality rank, with the graphic layer group having the highest quality rank ordered first;
decoding (620) the received graphic layer groups in the composite video frame that are received prior to a decoding deadline;
deriving (630) a substitute graphic layer group for each of one or more late-arriving graphic layer groups in the composite video frame that are not received before the decoding deadline;
rendering (640) the composite video frame from the graphic layers in the received graphic layer groups and substitute graphic layer groups; and
sending (650) feedback to the server node (100, 700) indicating the graphic layer groups that were timely received.

10. The method (600) of claim 9, wherein deriving a substitute graphic layer comprises, for each late-arriving graphic layer group:
retrieving a previous graphic layer group corresponding to the late-arriving graphic layer group from a buffer; and
deriving the substitute graphic layer group based on the previous graphic layer group.

11. The method (600) of claims 9 or 10, further comprising storing the timely received graphic layer groups and substitute graphic layer groups in a buffer.

12. The method (600) of claim 11, further comprising:
after the decoding deadline, after a decoding deadline for the current frame, receiving a late-arriving graphic layer group;
decoding a late-arriving graphic layer group; and
storing the late-arriving graphic layer group in a buffer by replacing a corresponding substitute graphic layer group with the late-arriving graphic layer group.

13. A server node (100, 700) configured to perform remote rendering, the server being configured to:
split render a current video frame to create a plurality of graphic layers, each graphic layer comprising one or more objects;
group and sort the graphic layers according to quality metric associated with the graphic layers to create multiple graphic layer groups with different quality ranks;
encode the graphic layer groups to a composite video frame, wherein the graphic layer groups are encoded and are assembled into the composite video frame in sorted order based on quality rank, with the graphic layer group having the highest quality rank ordered first, and wherein each graphic layer group in the composite video frame is separately decodable; and
transmit, in the sorted order based on quality rank, each graphic layer group of the composite video frame to a client device (200, 800).

14. A client device (200, 800) for displaying video, the client device (200, 800) being configured to:
receive at least a part of a composite video frame from a server node (100, 700), the composite video frame comprising a plurality of separately decodable graphic layer groups, each graphic layer group including one or more graphic layers associated with a quality metric and representing an object in a visual scene, wherein the graphic layer groups have different quality ranks and are in sorted order based on quality rank, with the graphic layer group having the highest quality rank ordered first;
decode the received graphic layer groups in the composite video frame that are received prior to a decoding deadline;
derive a substitute graphic layer group for each of one or more late-arriving graphic layer groups in the composite video frame that are not received before the decoding deadline;
render and displaying the composite video frame from the graphic layers in the received graphic layer groups and substitute graphic layer groups; and
send feedback to the server node (100, 700) indicating the graphic layer groups that were timely received.

15. A computer program comprising executable instructions that, when executed by a processing circuit in a server node (100, 700), causes the server node (100, 700) to perform any one of the methods of claims 1 - 8.

16. A computer program comprising executable instructions that, when executed by a processing circuit in a client device (200, 800), causes the client device (200, 800) to perform any one of the methods of claims 9 - 12.

## Patentansprüche

1. Verfahren (500) zum Remote-Rendering, das von einem Serverknoten (100, 700) implementiert wird, wobei das Verfahren Folgendes umfasst:
Split-Rendering (510) einer visuellen Szene, um eine Vielzahl von Grafikebenen zu erstellen, wobei jede Grafikebene ein oder mehrere Objekte in der visuellen Szene umfasst;
Gruppieren und Sortieren (520) der Grafikebenen gemäß einer mit den Grafikebenen verknüpften Qualitätsmetrik, um mehrere Grafikebenengruppen mit unterschiedlichen Qualitätsstufen zu erstellen;
Kodieren (530) der Grafikebenengruppen in ein zusammengesetztes Videoframe, wobei die Grafikebenengruppen kodiert und in sortierter Reihenfolge basierend auf der Qualitätsstufe zu dem zusammengesetzten Videoframe zusammengefügt werden, wobei die Grafikebenengruppe, die die höchste Qualitätsstufe aufweist, als erste gereiht wird, und wobei jede Grafikebenengruppe in dem zusammengesetzten Videoframe separat dekodierbar ist; und
Übertragen (540) jeder Grafikebenengruppe des zusammengesetzten Videoframes in der auf der Qualitätsstufe basierenden sortierten Reihenfolge an eine Client-Vorrichtung (200, 800).

2. Verfahren (500) nach Anspruch 1, das weiter Hinzufügen von Metadaten zum zusammengesetzten Videoframe umfasst, die jede Grafikebene und ihre Position im Videoframe identifizieren.

3. Verfahren (500) nach Anspruch 1, wobei Gruppieren und Sortieren der Grafikebenen Gruppieren von M Grafikebenen in N Grafikebenengruppen basierend auf Qualitätsmetriken der Grafikebenen umfasst, wobei M > N.

4. Verfahren (500) nach Anspruch 1, weiter umfassend:
Empfangen einer Rückmeldung von der Client-Vorrichtung (200, 800), die auf in einem vorherigen Frame empfangene Grafikebenen hinweist;
Bestimmen der Qualitätsmetriken für die Grafikebenen basierend auf der Rückmeldung von der Client-Vorrichtung (200, 800).

5. Verfahren (500) nach Anspruch 1, weiter umfassend:
Empfangen einer Rückmeldung von der Client-Vorrichtung (200, 800), die auf in einem vorherigen Frame empfangene Grafikebenen hinweist;
Bestimmen einer Kodierung für eine Grafikebene basierend auf der Rückmeldung von der Client-Vorrichtung (200, 800).

6. Verfahren (300) nach Anspruch 5, wobei Bestimmen einer Kodierung für eine Grafikebene basierend auf der Rückmeldung von der Client-Vorrichtung (200, 800) Reduzieren einer Kodierungsrate für eine Grafikebenengruppe umfasst, wenn die Rückmeldung angibt, dass eine der Grafikebenen in der Gruppe im vorherigen Frame nicht empfangen wurde.

7. Verfahren (500) nach einem der Ansprüche 1-5, weiter umfassend:
Erfassen von Überlastung der Kommunikationsverbindung zwischen der Rendering-Vorrichtung und der Client-Vorrichtung (200, 800);
unabhängiges Variieren der Kodierungsrate für jede Gruppe basierend auf erfasster Überlastung.

8. Verfahren (500) nach Anspruch 7, wobei unabhängiges Variieren der Kodierungsrate basierend auf erfasster Überlastung Folgendes umfasst:
Reduzieren einer Kodierungsrate für mindestens eine Grafikebenengruppe, wenn Überlastung erfasst wird; und
Erhöhen einer Kodierungsrate für mindestens eine Gruppe, wenn Überlastung nicht erfasst wird.

9. Verfahren (600), das von einer Client-Vorrichtung (200, 800) implementiert wird, zum Anzeigen von Video, wobei das Verfahren Folgendes umfasst:
Empfangen (610) mindestens eines Teils eines zusammengesetzten Videoframes von einem Serverknoten (100, 700), wobei das zusammengesetzte Videoframe eine Vielzahl von separat dekodierbaren Grafikebenengruppen umfasst, wobei jede Grafikebenengruppe eine oder mehrere Grafikebenen beinhaltet, die mit einer Qualitätsmetrik verknüpft sind und ein Objekt in einer visuellen Szene darstellen, wobei die Grafikebenengruppen unterschiedliche Qualitätsstufen aufweisen und in sortierter Reihenfolge basierend auf der Qualitätsstufe sind, wobei die Grafikebenengruppe, die die höchste Qualitätsstufe aufweist, als erstes gereiht ist;
Dekodieren (620) der empfangenen Grafikebenengruppen im zusammengesetzten Videoframe, die vor einer Dekodierungsfrist empfangen wurden;
Ableiten (630) einer Ersatzgrafikebenengruppe für jede von einer oder mehreren spät eintreffenden Grafikebenengruppen im zusammengesetzten Videoframe, die nicht vor der Dekodierungsfrist empfangen wurden;
Rendern (640) des zusammengesetzten Videoframes aus den Grafikebenen in den empfangenen Grafikebenengruppen und Ersatzgrafikebenengruppen; und
Senden (650) einer Rückmeldung an den Serverknoten (100, 700), die die rechtzeitig empfangenen Grafikebenengruppen angibt.

10. Verfahren (600) nach Anspruch 9, wobei Ableiten einer Ersatzgrafikebene für jede spät eintreffende Grafikebenengruppe Folgendes umfasst:
Abrufen einer vorherigen Grafikebenengruppe, die der spät eintreffenden Grafikebenengruppe entspricht, aus einem Puffer; und
Ableiten der Ersatzgrafikebenengruppe basierend auf der vorherigen Grafikebenengruppe.

11. Verfahren (600) nach Anspruch 9 oder 10, das weiter Speichern der rechtzeitig empfangenen Grafikebenengruppen und Ersatzgrafikebenengruppen in einem Puffer umfasst.

12. Verfahren (600) nach Anspruch 11, weiter umfassend:
nach der Dekodierungsfrist, nach einer Dekodierungsfrist für das aktuelle Frame, Empfangen einer spät eintreffenden Grafikebenengruppe;
Dekodieren einer spät eintreffenden Grafikebenengruppe; und
Speichern der spät eintreffenden Grafikebenengruppe in einem Puffer durch Ersetzen einer entsprechenden Ersatzgrafikebenengruppe durch die spät eintreffende Grafikebenengruppe.

13. Serverknoten (100, 700), der zum Durchführen von Remote-Rendering konfiguriert ist, wobei der Server für Folgendes konfiguriert ist:
Split-Rendern eines aktuellen Videoframes, um eine Vielzahl von Grafikebenen zu erstellen, wobei jede Grafikebene ein oder mehrere Objekte umfasst;
Gruppieren und Sortieren der Grafikebenen gemäß einer mit den Grafikebenen verknüpften Qualitätsmetrik, um mehrere Grafikebenengruppen mit unterschiedlichen Qualitätsstufen zu erstellen;
Kodieren der Grafikebenengruppen in ein zusammengesetztes Videoframe, wobei die Grafikebenengruppen kodiert und in sortierter Reihenfolge basierend auf der Qualitätsstufe zu dem zusammengesetzten Videoframe zusammengefügt werden, wobei die Grafikebenengruppe, die die höchste Qualitätsstufe aufweist, als erste gereiht wird, und wobei jede Grafikebenengruppe in dem zusammengesetzten Videoframe separat dekodierbar ist; und
Übertragen jeder Grafikebenengruppe des zusammengesetzten Videoframes in der auf der Qualitätsstufe basierenden sortierten Reihenfolge an eine Client-Vorrichtung (200, 800).

14. Client-Vorrichtung (200, 800) zum Anzeigen von Videos, wobei die Client-Vorrichtung (200, 800) für Folgendes konfiguriert ist:
Empfangen mindestens eines Teils eines zusammengesetzten Videoframes von einem Serverknoten (100, 700), wobei das zusammengesetzte Videoframe eine Vielzahl von separat dekodierbaren Grafikebenengruppen umfasst, wobei jede Grafikebenengruppe eine oder mehrere Grafikebenen beinhaltet, die mit einer Qualitätsmetrik verknüpft sind und ein Objekt in einer visuellen Szene darstellen, wobei die Grafikebenengruppen unterschiedliche Qualitätsstufen aufweisen und in sortierter Reihenfolge basierend auf der Qualitätsstufe sind, wobei die Grafikebenengruppe, die die höchste Qualitätsstufe aufweist, als erstes gereiht ist;
Dekodieren der empfangenen Grafikebenengruppen im zusammengesetzten Videoframe, die vor einer Dekodierungsfrist empfangen wurden;
Ableiten einer Ersatzgrafikebenengruppe für jede von einer oder mehreren spät eintreffenden Grafikebenengruppen im zusammengesetzten Videoframe, die nicht vor der Dekodierungsfrist empfangen wurden;
Rendern und Anzeigen des zusammengesetzten Videoframes aus den Grafikebenen in den empfangenen Grafikebenengruppen und Ersatzgrafikebenengruppen; und
Senden einer Rückmeldung an den Serverknoten (100, 700), die die rechtzeitig empfangenen Grafikebenengruppen angibt.

15. Computerprogramm, das ausführbare Anweisungen umfasst, die, wenn sie von einem Verarbeitungsschaltkreis in einem Serverknoten (100, 700) ausgeführt werden, den Serverknoten (100, 700) veranlassen, eines der Verfahren nach den Ansprüchen 1-8 durchzuführen.

16. Computerprogramm, das ausführbare Anweisungen umfasst, die, wenn sie von einem Verarbeitungsschaltkreis in einer Client-Vorrichtung (200, 800) ausgeführt werden, die Client-Vorrichtung (200, 800) veranlassen, eines der Verfahren nach den Ansprüchen 9-12 durchzuführen.

## Revendications

1. Procédé (500) de rendu à distance mis en œuvre par un nœud serveur (100, 700), le procédé comprenant :
le rendu fractionné (510) d'une scène visuelle pour créer une pluralité de couches graphiques, chaque couche graphique comprenant un ou plusieurs objets dans la scène visuelle ;
le regroupement et le tri (520) des couches graphiques selon une métrique de qualité associée aux couches graphiques pour créer de multiples groupes de couches graphiques avec différents rangs de qualité ;
le codage (530) des groupes de couches graphiques en une trame vidéo composite, dans lequel les groupes de couches graphiques sont codés et assemblés dans la trame vidéo composite par ordre de tri sur la base du rang de qualité, le groupe de couches graphiques présentant le rang de qualité le plus élevé étant classé en premier, et dans lequel chaque groupe de couches graphiques de la trame vidéo composite peut être décodé séparément ; et
la transmission (540), dans l'ordre de tri sur la base du rang de qualité, de chaque groupe de couches graphiques de la trame vidéo composite à un dispositif client (200, 800).

2. Procédé (500) selon la revendication 1, comprenant en outre l'ajout de métadonnées à la trame vidéo composite identifiant chaque couche graphique et sa position dans la trame vidéo.

3. Procédé (500) selon la revendication 1, dans lequel le regroupement et le tri des couches graphiques comprennent le regroupement de M couches graphiques en N groupes de couches graphiques sur la base de métriques de qualité des couches graphiques, où M > N.

4. Procédé (500) selon la revendication 1, comprenant en outre :
la réception d'un retour d'information du dispositif client (200, 800) indiquant les couches graphiques reçues dans une trame précédente ;
la détermination des métriques de qualité pour les couches graphiques sur la base du retour d'information du dispositif client (200, 800).

5. Procédé (500) selon la revendication 1, comprenant en outre :
la réception d'un retour d'information du dispositif client (200, 800) indiquant les couches graphiques reçues dans une trame précédente ;
la détermination d'un codage pour une couche graphique sur la base du retour d'information du dispositif client (200, 800).

6. Procédé (300) selon la revendication 5, dans lequel la détermination d'un codage pour une couche graphique sur la base du retour d'information du dispositif client (200, 800) comprend la réduction d'un taux de codage pour un groupe de couches graphiques lorsque le retour d'information indique que l'une des couches graphiques du groupe n'a pas été reçue dans la trame précédente.

7. Procédé (500) selon l'une quelconque des revendications 1-5, comprenant en outre :
la détection d'une congestion dans la liaison de communication entre le dispositif de rendu et le dispositif client (200, 800) ;
la variation indépendante du taux de codage pour chaque groupe sur la base de la congestion détectée.

8. Procédé (500) selon la revendication 7, dans lequel la variation indépendante du taux de codage sur la base de la congestion détectée comprend :
la réduction d'un taux de codage pour au moins un groupe de couches graphiques lorsqu'une congestion est détectée ; et
l'augmentation d'un taux de codage pour au moins un groupe lorsqu'une congestion n'est pas détectée.

9. Procédé (600) mis en œuvre par un dispositif client (200, 800) d'affichage de vidéo, le procédé comprenant :
la réception (610) d'au moins une partie d'une trame vidéo composite à partir d'un nœud serveur (100, 700), la trame vidéo composite comprenant une pluralité de groupes de couches graphiques pouvant être décodés séparément, chaque groupe de couches graphiques incluant une ou plusieurs couches graphiques associées à une métrique de qualité et représentant un objet dans une scène visuelle, dans lequel les groupes de couches graphiques présentent des rangs de qualité différents et sont par ordre de tri sur la base du rang de qualité, le groupe de couches graphiques présentant le rang de qualité le plus élevé étant classé en premier ;
le décodage (620) des groupes de couches graphiques reçus dans la trame vidéo composite qui sont reçus avant un délai de décodage ;
la dérivation (630) d'un groupe de couches graphiques de substitution pour chacun d'un ou plusieurs groupes de couches graphiques arrivant en retard dans la trame vidéo composite qui ne sont pas reçus avant le délai de décodage ;
le rendu (640) de la trame vidéo composite à partir des couches graphiques dans les groupes de couches graphiques reçus et les groupes de couches graphiques de substitution ; et
l'envoi (650) d'un retour d'information au nœud serveur (100, 700) indiquant les groupes de couches graphiques qui ont été reçus dans le délai.

10. Procédé (600) selon la revendication 9, dans lequel la dérivation d'une couche graphique de substitution comprend, pour chaque groupe de couches graphiques arrivant en retard :
la récupération d'un groupe de couches graphiques précédent correspondant au groupe de couches graphiques arrivant en retard à partir d'une mémoire tampon ; et
la dérivation du groupe de couches graphiques de substitution sur la base du groupe de couches graphiques précédent.

11. Procédé (600) selon les revendications 9 ou 10, comprenant en outre le stockage des groupes de couches graphiques reçus dans le délai et des groupes de couches graphiques de substitution dans une mémoire tampon.

12. Procédé (600) selon la revendication 11, comprenant en outre :
après le délai de décodage, après un délai de décodage pour la trame actuelle, la réception d'un groupe de couches graphiques arrivant en retard ;
le décodage d'un groupe de couches graphiques arrivant en retard ; et
le stockage du groupe de couches graphiques arrivant en retard dans une mémoire tampon en remplaçant un groupe de couches graphiques de substitution correspondant par le groupe de couches graphiques arrivant en retard.

13. Nœud serveur (100, 700) configuré pour réaliser un rendu à distance, le serveur étant configuré pour :
fractionner le rendu d'une image vidéo actuelle pour créer une pluralité de couches graphiques, chaque couche graphique comprenant un ou plusieurs objets ;
regrouper et trier les couches graphiques en fonction d'une métrique de qualité associée aux couches graphiques pour créer de multiples groupes de couches graphiques avec différents rangs de qualité ;
coder les groupes de couches graphiques dans une image vidéo composite, dans lequel les groupes de couches graphiques sont codés et assemblés dans la trame vidéo composite par ordre de tri sur la base du rang de qualité, le groupe de couches graphiques présentant le rang de qualité le plus élevé étant classé en premier, et dans lequel chaque groupe de couches graphiques dans la trame vidéo composite peut être décodé séparément ; et
transmettre, dans l'ordre de tri sur la base du rang de qualité, chaque groupe de couches graphiques de la trame vidéo composite à un dispositif client (200, 800).

14. Dispositif client (200, 800) pour afficher une vidéo, le dispositif client (200, 800) étant configuré pour :
recevoir au moins une partie d'une trame vidéo composite d'un nœud serveur (100, 700), la trame vidéo composite comprenant une pluralité de groupes de couches graphiques pouvant être décodés séparément, chaque groupe de couches graphiques incluant une ou plusieurs couches graphiques associées à une métrique de qualité et représentant un objet dans une scène visuelle, dans lequel les groupes de couches graphiques présentent des rangs de qualité différents et sont par ordre de tri sur la base d'un rang de qualité, le groupe de couches graphiques présentant le rang de qualité le plus élevé étant classé en premier ;
décoder les groupes de couches graphiques reçus dans la trame vidéo composite qui sont reçus avant un délai de décodage ;
dériver un groupe de couches graphiques de substitution pour chacun d'un ou plusieurs groupes de couches graphiques arrivant en retard dans la trame vidéo composite qui ne sont pas reçus avant le délai de décodage ;
rendre et afficher la trame vidéo composite à partir des couches graphiques dans les groupes de couches graphiques reçus et les groupes de couches graphiques de substitution ; et
envoyer un retour d'information au nœud serveur (100, 700) indiquant les groupes de couches graphiques qui ont été reçus dans le délai.

15. Programme informatique comprenant des instructions exécutables qui, lorsqu'elles sont exécutées par un circuit de traitement dans un nœud serveur (100, 700), amènent le nœud serveur (100, 700) à réaliser l'un quelconque des procédés selon les revendications 1-8.

16. Programme informatique comprenant des instructions exécutables qui, lorsqu'elles sont exécutées par un circuit de traitement dans un dispositif client (200, 800), amènent le dispositif client (200, 800) à réaliser l'un quelconque des procédés selon les revendications 9-12.
